(19) Europäisches Patentamt
European Patent Office
Office européen des brevets

(11) EP 4 071 757 A1

(12) EUROPEAN PATENT APPLICATION
published in accordance with Art. 153(4) EPC

(43) Date of publication:
12.10.2022 Bulletin 2022/41

(51) International Patent Classification (IPC):
$G10L\ 21/0216$ (2013.01)   $G10L\ 21/0232$ (2013.01)
$G10L\ 21/0208$ (2013.01)

(21) Application number: 20896651.5

(22) Date of filing: 07.12.2020

(86) International application number:
PCT/CN2020/134336

(87) International publication number:
WO 2021/110175 (10.06.2021 Gazette 2021/23)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 06.12.2019 CN 201911241302

(71) Applicant: Spreadtrum Communications
(Shanghai) Co., Ltd.
Shanghai 201203 (CN)

(72) Inventors:
• LUO, Benbiao
Shanghai 201203 (CN)
• PAN, Siwei
Shanghai 201203 (CN)
• DONG, Fei
Shanghai 201203 (CN)
• YONG, Yaqin
Shanghai 201203 (CN)
• JI, Wei
Shanghai 201203 (CN)
• YU, Weiwei
Shanghai 201203 (CN)
• LIN, Fuhui
Shanghai 201203 (CN)

(74) Representative: Gill Jennings & Every LLP
The Broadgate Tower
20 Primrose Street
London EC2A 2ES (GB)

(54) **ECHO CANCELLATION METHOD AND DEVICE**

(57) An echo cancellation method and apparatus (100), which are applied to an electronic device having a first sound pickup apparatus and a second sound pickup apparatus, are used in a voice communication process to: perform, with use of a first near-end signal $d_1(k)$, adaptive filtering on a second near-end signal $d_2(k)$ that is delayed, to obtain a first filtering signal $e_2(k)$, where the filtering signal $e_2(k)$ is an echo signal with a voice being filtered out and with only an echo being retained; then determine, with use of the filtering signal $e_2(k)$, a signal to be transmitted $EE_1(k)$; and send same to a peer-end electronic device. In this process, two microphones perform adaptive filtering on each other, so that a voice signal in a sound signal picked up by one of the microphones is removed to obtain a pure-echo signal. By using the pure-echo signal to cancel a non-linear echo in the sound signal picked up by any one of the microphones, a purpose of cancelling the non-linear echo is achieved.

```
┌─────────────────────────────────────────────────┐ ~101
│ Perform, with use of a first near-end signal,   │
│ adaptive filtering on a second near-end signal  │
│ that is delayed, to obtain a first filtering    │
│ signal                                          │
└─────────────────────────────────────────────────┘
                        │
                        ▼
┌─────────────────────────────────────────────────┐ ~102
│ Perform, according to the first filtering       │
│ signal, non-linear echo signal cancellation     │
│ processing on a target signal subjected to a    │
│ linear echo cancellation, to obtain a signal to │
│ be transmitted                                  │
└─────────────────────────────────────────────────┘
                        │
                        ▼
┌─────────────────────────────────────────────────┐ ~103
│                                                 │
│ Send the signal to be transmitted               │
│                                                 │
└─────────────────────────────────────────────────┘
```

FIG. 4

EP 4 071 757 A1

## Description

The present application claims priority to Chinese Patent Application No. 201911241302.7, filed on December 06, 2019 and titled "Echo Cancellation Method and Apparatus", which is hereby incorporated by reference in its entirety.

## TECHNICAL FIELD

Embodiments of the present invention relate to the field of signal processing technologies and, in particular, to an echo cancellation method and apparatus.

## BACKGROUND

In an audio system, due to coupling between a speaker and a microphone, generation of an acoustic echo is inevitable. The acoustic echo subjected to a channel delay is transmitted back to a peer-end speaker, which thus affects audio call quality. Especially in a case of a hands-free call, an echo with too much energy will cause serious interference to a far-end communicator.

During the hands-free call, a voice of a peer end, after reaching a local end, is played by the speaker of the local end, and then picked up by the microphone of the local end and sent to the peer end, and this sound is called an echo. When the speaker of the local end plays the voice sent by the peer end: if the communicator at the local end does not speak, the sound collected by the microphone at the local end is a pure echo, and this stage is called a pure-echo stage; if the communicator at the local end speaks while the speaker is playing the voice of the peer end, the sound collected by the microphone at the local end includes the voice played by the speaker and the voice of the communicator at the local end, the sound at the local end is called a near-end voice, and this stage is called a double talk stage. A current common echo cancellation algorithm includes two modules: an adaptive filtering module and a non-linear programming module, where a linear echo is removed through adaptive filtering and a remaining non-linear echo is suppressed by the non-linear programming module. In a non-linear programming process, in order to ensure that the echo in the pure-echo stage is cancelled cleanly, a non-linear suppression parameter is usually set relatively large. However, in the double talk stage, if the non-linear suppression parameter continues to be set relatively large, since it is difficult for the non-linear programming module to distinguish between the echo and the near-end voice, the non-linear programming module may easily suppress the near-end voice as the echo, thereby the voice received by the peer end is unclear, and the communicator at the peer end cannot understand the intention of the speaker at the local end.

Therefore, it is really an urgent problem to be solved in the double talk stage with regard to how to reduce the non-linear echo so as to improve call quality.

## SUMMARY

Embodiments of the present application provide an echo cancellation method and apparatus, two microphones perform adaptive filtering on each other, so that a voice signal in a sound signal picked up by one of the microphones is removed to obtain a pure-echo signal. By using the pure-echo signal to cancel a non-linear echo in the sound signal picked up by any one of the microphones, a purpose of cancelling the non-linear echo is improved.

In a first aspect, an embodiment of the present application provides an echo cancellation method, which is applied to an electronic device having a first sound pickup apparatus and a second sound pickup apparatus, and the method includes:

performing, with use of a first near-end signal $d_1(k)$, adaptive filtering on a second near-end signal $d_2(k)$ that is delayed, to obtain a first filtering signal $e_2(k)$, where the first near-end signal $d_1(k)$ is a signal picked up by the first sound pickup apparatus, and the second near-end signal $d_2(k)$ is a signal picked up by the second sound pickup apparatus;

performing non-linear echo signal cancellation processing on a target signal according to the first filtering signal $e_2(k)$ to obtain a signal to be transmitted $EE_1(k)$, where the target signal is the first near-end signal $d_1(k)$ or the second near-end signal $d_2(k)$;

sending the signal to be transmitted $EE_1(k)$.

In a feasible design, when the target signal is the first near-end signal $d_1(k)$, the performing the non-linear echo signal cancellation processing on the target signal according to the first filtering signal $e_2(k)$ to obtain the signal to be transmitted $EE_1(k)$ includes:

constructing a non-linear suppression parameter *Para* according to the first filtering signal $e_2(k)$ and the first near-

end signal $d_1(k)$; and

performing the non-linear echo signal cancellation processing on the first near-end signal $d_1(k)$ according to the non-linear suppression parameter *Para* to obtain the signal to be transmitted $EE_1(k)$.

In a feasible design, the performing the non-linear echo signal cancellation processing on the first near-end signal $d_1(k)$ according to the non-linear suppression parameter *Para* to obtain the signal to be transmitted $EE_1(k)$ includes:

determining a first intermediate signal $E_2(k)$ according to the first filtering signal $e_2(k)$, the first intermediate signal

$$E_2(k) = FFT \begin{bmatrix} e_2(k-1) \\ e_2(k) \end{bmatrix}$$
, where $e_2(k-1)$ is a previous frame signal of $e_2(k)$;

determining a second intermediate signal $D_2(k)$ according to the second near-end signal $d_2(k)$, the second interme-

diate signal $D_2(k) = FFT \begin{bmatrix} d_2(k-1) \\ d_2(k) \end{bmatrix}$, where $d_2(k-1)$ is a previous frame signal of $d_2(k)$;

determining a first frequency domain signal $YY(k)$ according to the first intermediate signal $E_2(k)$, where the first frequency domain signal $YY(k)$ is equal to first M+1 elements of $E_2(k)$;

determining a second frequency domain signal XX(k) according to the second intermediate signal $D_2(k)$, where the second frequency domain signal XX(k) is equal to first M+1 elements of $D_2(k)$; and

constructing the non-linear suppression parameter *Para* according to the first frequency domain signal $YY(k)$ and the second frequency domain signal XX(k), *Para*=[abs(XX(k))-abs(YY(k))]/abs(XX(k)); where FFT represents a fast Fourier transform, abs represents a modulus of a complex number.

In a feasible design, the performing the non-linear echo signal cancellation processing on the first near-end signal $d_1(k)$ according to the non-linear suppression parameter *Para* to obtain the signal to be transmitted $EE_1(k)$ includes:

performing, with use of a downlink signal $x(k)$, the adaptive filtering on the first near-end signal $d_1(k)$ to obtain a

second filtering signal $e_1(k)$, $e_1(k) = x(k) \times (h_1^T - \hat{h}_1^T) + v_1(k)$, where $x(k)$ is a downlink signal played by the

speaker, $h_1^T$ is an echo path from the speaker to the first sound pickup apparatus, $\hat{h}_1^T$ is an estimation of the echo path from the speaker to the first sound pickup apparatus, $v_1(k)$ is a voice signal picked up by the first sound pickup apparatus;

determining a third intermediate signal $E_1(k)$ according to the second filtering signal $e_1(k)$, the third intermediate

signal $E_1(k) = FFT \begin{bmatrix} e_1(k-1) \\ e_1(k) \end{bmatrix}$, where $e_1(k-1)$ is a previous frame signal of $e_1(k)$;

determining a third frequency domain signal ZZ(k) according to the third intermediate signal $E_1(k)$, where the third frequency domain signal ZZ(k) is equal to first M+1 elements of $E_1(k)$; and

determining the signal to be transmitted $EE_1(k)$ according to the non-linear suppression parameter *Para* and the third frequency domain signal ZZ(k).

In a feasible design, the above method further includes:

determining a voice type of the first near-end signal $d_1(k)$, where the voice type includes a pure-echo type and a double talk voice type; and

determining a parameter $n$ according to the voice type, where the parameter $n$ corresponding to the pure-echo type is greater than the parameter $n$ corresponding to the double talk voice type, and the parameter $n$ is used to indicate a suppression intensity of a non-linear echo.

In a feasible design, the determining the signal to be transmitted $EE_1(k)$ according to the non-linear suppression parameter *Para* and the third frequency domain signal ZZ(k) includes:

determining an n-th power of the non-linear suppression parameter Para; and

determining the signal to be transmitted $EE_1(k)$ according to the n-th power of the non-linear suppression parameter *Para* and the third frequency domain signal ZZ(k), $EE_1(k)$ = ZZ(k)g para^n, where g represents dot multiplication.

In a feasible design, for an echo frequency point in the second frequency domain signal XX(k), a difference between the non-linear suppression parameter *Para* and 0 is less than a first threshold, for a voice frequency point in the second frequency domain signal XX(k), a difference between the non-linear suppression parameter *Para* and 1 is less than a second threshold.

In a feasible design, when the target signal is the first near-end signal $d_1(k)$, the determining the target signal according to the first filtering signal $e_2(k)$ includes:

performing, with use of the first filtering signal $e_2(k)$, first Wiener filtering on the first near-end signal $d_2(k)$ to obtain a first Wiener result;
determining a voice type of the first near-end signal $d_2(k)$ according to the first Wiener result, where the voice type includes a pure-echo type and a double talk voice type;
determining a Wiener filtering intensity according to the voice type, where the Wiener filtering intensity corresponding to the pure-echo type is greater than the Wiener filtering intensity corresponding to the double talk voice type;
performing second Wiener filtering on the first near-end signal $d_2(k)$ according to the Wiener filtering intensity to obtain a second Wiener result, and obtaining the signal to be transmitted $EE_1(k)$ according to the second Wiener result.

In a second aspect, an embodiment of the present application provides an echo cancellation apparatus, which is applied to an electronic device having a first sound pickup apparatus and a second sound pickup apparatus, and the echo cancellation apparatus includes:

a filtering module, configured to perform, with use of a first near-end signal $d_1(k)$, adaptive filtering on a second near-end signal $d_2(k)$ that is delayed, to obtain a first filtering signal $e_2(k)$, where the first near-end signal $d_1(k)$ is a signal picked up by the first sound pickup apparatus, and the second near-end signal $d_2(k)$ is a signal picked up by the second sound pickup apparatus;
an echo cancellation module, configured to perform non-linear echo signal cancellation processing on a target signal according to the first filtering signal $e_2(k)$ to obtain the signal to be transmitted $EE_1(k)$, where the target signal is the first near-end signal $d_1(k)$ or the second near-end signal $d_2(k)$; and
a sending module, configured to send the signal to be transmitted $EE_1(k)$.

In a feasible design, when the target signal is the first near-end signal $d_1(k)$, the echo cancellation module is specifically configured to: construct a non-linear suppression parameter *Para* according to the first filtering signal $e_2(k)$ and the first near-end signal $d_1(k)$; and perform the non-linear echo signal cancellation processing on the first near-end signal $d_1(k)$ according to the non-linear suppression parameter *Para* to obtain the signal to be transmitted $EE_1(k)$.

In a feasible design, the echo cancellation module is specifically configured to: determine a first intermediate signal $E_2(k)$ according to the first filtering signal $e_2(k)$, the first intermediate signal

$$E_2(k) = FFT\begin{bmatrix} e_2(k-1) \\ e_2(k) \end{bmatrix}$$

, where $e_2(k-1)$ is a previous frame signal of $e_2(k)$; determine a second intermediate signal $D_2(k)$ according to the second near-end signal $d_2(k)$, the second intermediate signal

$$D_2(k) = FFT\begin{bmatrix} d_2(k-1) \\ d_2(k) \end{bmatrix}$$

, where $d_2(k-1)$ is a previous frame signal of $d_2(k)$; determine a first frequency domain signal YY(k) according to the first intermediate signal $E_2(k)$, where the first frequency domain signal YY(k) is equal to first M+1 elements of $E_2(k)$; determine a second frequency domain signal XX(k) according to the second intermediate signal $D_2(k)$, where the second frequency domain signal XX(k) is equal to first M+1 elements of $D_2(k)$; and construct the non-linear suppression parameter *Para* according to the first frequency domain signal YY(k) and the second frequency domain signal XX(k), *Para* = [abs(XX(k))- abs(YY(k))]/ abs(XX(k)); where FFT represents a fast Fourier transform, abs represents a modulus of a complex number.

In a feasible design, the echo cancellation module is configured to: perform, with use of a downlink signal x(k), the adaptive filtering on the first near-end signal $d_1(k)$ to obtain a second filtering signal $e_1(k)$,

$$e_1(k) = x(k) \times (h_1^T - \hat{h}_1^T) + v_1(k)$$

, where x(k) is a downlink signal played by the speaker, $h_1^T$ is an echo path from the speaker to the first sound pickup apparatus, $\hat{h}_1^T$ is an estimation of the echo path from the speaker to the first sound pickup apparatus, $v_1(k)$ is a voice signal picked up by the first sound pickup apparatus; determine a third intermediate signal $E_1(k)$ according to the second filtering signal $e_1(k)$, the third intermediate signal $E_1(k) = FFT\begin{bmatrix} e_1(k-1) \\ e_1(k) \end{bmatrix}$, where $e_1(k-1)$ is a previous frame signal of $e_1(k)$; determine a third frequency domain signal ZZ(k) according to the third intermediate signal $E_1(k)$, where the third frequency domain signal ZZ(k) is equal to first M+1 elements of $E_1(k)$; and determine the signal to be transmitted $EE_1(k)$ according to the non-linear suppression parameter *Para* and the third frequency domain signal ZZ(k).

In a feasible design, the above apparatus further includes:
a double talk determining module, configured to determine a voice type of the first near-end signal $d_1(k)$, where the voice type includes a pure-echo type and a double talk voice type; and determine a parameter *n* according to the voice type, where the parameter *n* corresponding to the pure-echo type is greater than the parameter *n* corresponding to the double talk voice type, and the parameter *n* is used to indicate a suppression intensity of a non-linear echo.

In a feasible design, the echo cancellation module is configured to: determine an n-th power of the non-linear suppression parameter Para; and determine the signal to be transmitted $EE_1(k)$ according to the n-th power of the non-linear suppression parameter *Para* and the third frequency domain signal ZZ(k), $EE_1(k)$ = ZZ(k)g para^ *n*, where *g* represents dot multiplication.

In a feasible design, for an echo frequency point in the second frequency domain signal XX(k), a difference between the non-linear suppression parameter *Para* and 0 is less than a first threshold, for a voice frequency point in the second frequency domain signal XX(k), a difference between the non-linear suppression parameter *Para* and 1 is less than a second threshold.

In a feasible design, the echo cancellation module is configured to: perform, with use of the first filtering signal $e_2(k)$, first Wiener filtering on the first near-end signal $d_2(k)$ to obtain a first Wiener result; determine a voice type of the first near-end signal $d_2(k)$ according to the first Wiener result, where the voice type includes a pure-echo type and a double talk voice type; determine a Wiener filtering intensity according to the voice type, where the Wiener filtering intensity corresponding to the pure-echo type is greater than the Wiener filtering intensity corresponding to the double talk voice type; perform second Wiener filtering on the first near-end signal $d_2(k)$ according to the Wiener filtering intensity to obtain a second Wiener result, and obtain the signal to be transmitted $EE_1(k)$ according to the second Wiener result.

In a third aspect, an embodiment of the present invention provides an electronic device, including: a processor, a memory, and a computer program stored on the memory and runnable on the processor, where when the processor executes the program, the method of the first aspect or various feasible implementations of the first aspect is implemented.

In a fourth aspect, an embodiment of the present invention provides a readable storage medium having instructions stored thereon, where when the instructions run on an electronic device, the electronic device is enabled to execute the method of the first aspect or various feasible implementations of the first aspect.

In a fifth aspect, an embodiment of the present invention provides a computer program product, where when the computer program product runs on an electronic device, the electronic device is enabled to execute the method described in the first aspect or various feasible implementations of the first aspect.

The echo cancellation method and apparatus according to embodiments of the present application, which are applied to an electronic device having a first sound pickup apparatus and a second sound pickup apparatus, are used in a voice communication process to: perform, with use of a first near-end signal $d_1(k)$, adaptive filtering on a second near-end signal $d_2(k)$ that is delayed, to obtain a first filtering signal $e_2(k)$, where the filtering signal $e_2(k)$ is an echo signal with a voice being filtered out and with only an echo being retained; then determine, with use of the filtering signal $e_2(k)$ $e_2(k)$, a signal to be transmitted $EE_1(k)$; and send same to a peer-end electronic device. In this process, two microphones perform adaptive filtering on each other, so that a voice signal in a sound signal picked up by one of the microphones is removed to obtain a pure-echo signal. By using the pure-echo signal to cancel a non-linear echo in the sound signal picked up by any one of the microphones, a purpose of cancelling the non-linear echo is improved.

## BRIEF DESCRIPTION OF DRAWINGS

In order to explain the embodiments of the present invention or the technical solutions in the prior art more clearly, the drawings to be used in the embodiments or the description of the prior art will be introduce briefly in the following. Obviously, the drawings in the following description are some embodiments of the present invention. For those of ordinary skill in the art, other drawings can be obtained from these drawings without paying creative labor.

FIG. 1 is a schematic diagram illustrating principles of adaptive cancellation of a linear echo in the prior art;

FIG. 2 is a schematic diagram illustrating principles of cancelling a non-linear echo in the prior art;

FIG. 3 is a schematic diagram of a network architecture of an echo cancellation method according to an example of the present application;

FIG. 4 is a flowchart of an echo cancellation method according to an embodiment of the present application;

FIG. 5 is a schematic diagram illustrating principles of an echo cancellation method according to an embodiment of the present application;

FIG. 6 is a schematic diagram of a first near-end signal and a second near-end signal in an echo cancellation method according to an embodiment of the present application;

FIG. 7 is a spectrogram of a near-end signal of mic2 in FIG. 6 before and after filtering;

FIG. 8 is a schematic diagram of a transmission result after mic1 and mic2 in FIG. 6 are subject to an echo cancellation;

FIG. 9 is another schematic diagram illustrating principles of an echo cancellation method according to an embodiment of the present application;

FIG. 10 is a schematic structural diagram of an echo cancellation apparatus according to an embodiment of the present invention;

FIG. 11 is a schematic diagram of another echo cancellation apparatus according to an embodiment of the present application; and

FIG. 12 is a schematic structural diagram of an electronic device according to an embodiment of the present invention.

## DESCRIPTION OF EMBODIMENTS

To describe the purposes, technical solutions and advantages of embodiments of the present invention more clearly, the technical solutions in the embodiments of the present invention are clearly and comprehensively described in the following with reference to the accompanying drawings of the embodiments of the present invention. Obviously, the described embodiments are part of embodiments of the present invention, not all embodiments. Based on the embodiments of the present invention, all other embodiments obtained by those of ordinary skill in the art without any creative effort are all within the protection scope of the present invention.

At present, when a local end (also referred as a callee end) electronic device plays a voice of a peer end, a speaker of the local end picks up the voice and sends it to the peer end, the sound is referred as an acoustic echo. The acoustic echo includes a line direct echo and an indirect echo, where the direct echo is also referred as a linear echo, which refers to a sound picked up by a microphone of an electronic device when a speaker of the electronic device plays the voice of the peer end; the indirect echo is also referred as a non-linear echo, which refers to a set of echoes that enter the microphone after successive reflections or multiple reflections from different paths when the speaker of the electronic device plays the voice of the peer end. Generally speaking, in a hands-free mode, due to reasons such as a poor material or structure of the speaker, a non-linear transmission path is very easy to produce, thereby the non-linear echo is produced. The acoustic echo is transmitted to the peer end after a channel delay, which affects quality of voice communications. Especially in the hands-free mode, an over-capacity echo will cause interference to a communicator on the peer end in terms of semantic understanding, which greatly affects communication experience. With an innovation of a communication technology, people's requirements for the quality of voice communications continue to improve, and echo cancellation has become a focus of the voice communications.

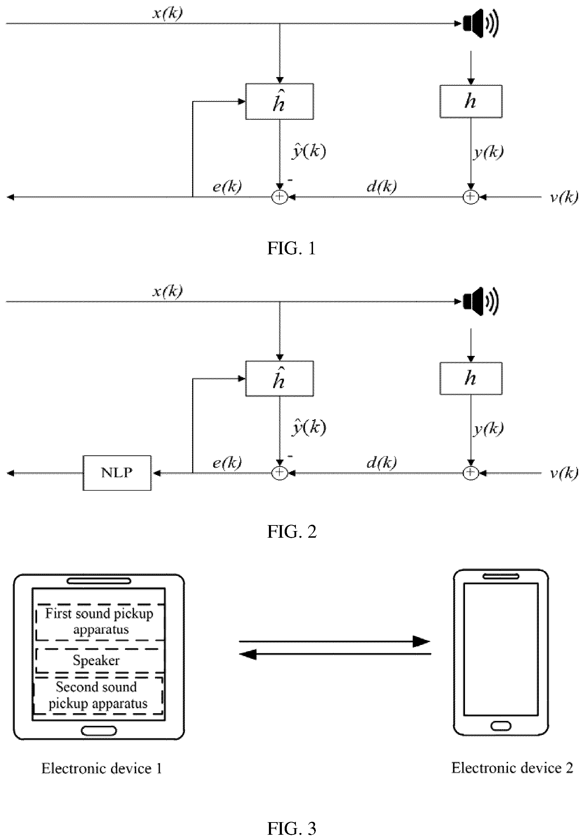

Common echo cancellation algorithms include at least an adaptive filtering module and a non-linear programming module, where the adaptive filtering module is configured to remove a linear echo, and a remaining non-linear echo is suppressed by a non-linear module. Exemplarily, reference may be made to FIG. 1 and FIG. 2.

FIG. 1 is a schematic diagram illustrating principles of adaptive cancellation of a linear echo in the prior art. Please refer to FIG. 1, in order to cancel an echo to a speaker for a voice communication, Bell Labs proposed to use an adaptive filtering (adaptive digital filter, ADF) method to achieve acoustic echo cancellation (Acoustic Echo Cancellation, AEC). In this method, an electronic device has a speaker and a microphone, a downlink signal x(k) played by a speaker at a local end generates an echo signal $y(k)$ through an echo channel $h$, and a near-end signal $d(k)$ collected by the microphone includes a near-end voice $v(k)$ and the echo signal $y(k)$. By using an M-taps adaptive filter (Finite Impulse Response, FIR) $\hat{h}$ to simulate the echo channel $h$, an adaptively simulated echo signal $\hat{y}(k)$ may approach to a real echo signal $y(k)$. Then, the simulated echo signal $\hat{y}(k)$ is subtracted from the near-end signal $d(k)$ to achieve a purpose of cancelling the echo. The formulas involved in this process are as follows:

$$y\left(k\right) = h^{T} * x(\mathrm{k}) \qquad (1)$$

$$\hat{y}\left(k\right) = \hat{h}^{T} * x(\mathrm{k}) \qquad (2)$$

$$d(k) = y(k) + v(k) \qquad (3)$$

$$e(k) = d(k) - \hat{y}(k) \qquad (4)$$

where $*$ represents a convolution, $h^T = [h_0, h_1, h_2, ... h_{M-1}]^T$ represents a real echo channel, and $\hat{h}^T = [\hat{h}_0, \hat{h}_1, \hat{h}_2, ... \hat{h}_{M-1}]^T$ represents an echo channel simulated by the adaptive filter. It can be known from the above formulas that: when the echo channel simulated by the adaptive filter is equal to the real echo channel, the adaptive filter can completely cancel the echo, retaining only the near-end voice.

In the above FIG. 1, the adaptive filter can cancel the linear echo of about 20 dB in an ideal case, but cannot cancel the non-linear echo.

FIG. 2 is a schematic diagram illustrating principles of cancelling a non-linear echo in the prior art. Please refer to FIG. 2, in order to perform non-linear programming (Non-linear programming, NLP) on a residual echo in FIG. 1, an *e(k)* signal that is linearly processed needs to continue the NPL processing. In a process of the NLP processing, in order to ensure that an echo in a pure-echo stage is cancelled cleanly, a non-linear suppression parameter is set relatively large. However, in a double talk stage, if the non-linear suppression parameter continues to be set relatively large, since it is difficult for a non-linear programming module to distinguish between an echo and a near-end voice, the non-linear programming module may easily suppress the near-end voice as the echo, thereby a voice received by a peer end is unclear, and a communicator at the peer end cannot understand the intention of a speaker at a local end.

In order to ensure that the voice can be retained as much as possible while the echo is cancelled completely, the non-linear programming and a double talk detection (Double Talk Detection, DTD) device are required to work together. In the pure-echo stage, a suppression coefficient of the non-linear parameter is increased, and a suppression coefficient of the non-linear parameter in the double talk stage is decreased to protect the voice. However, it is difficult to guarantee the accuracy of double talk detection, and it follows that NLP may not be able to cancel the pure echo or cause a great damage to the voice in the double talk stage, even if the accuracy of the double talk detection can reach 100% so that the echo can be effectively suppressed in a pure-echo node and the voice can be much protected in a double talk node, however, due to voice protection, since the non-linear programming cannot accurately distinguish the echo and the voice that are mixed together, the echo in the double talk stage cannot be suppressed extraordinarily.

In view of this, the embodiments of the present application provide an echo cancellation method and apparatus, two microphones perform adaptive filtering on each other, so that a voice signal in a sound signal picked up by one of the microphones is removed to obtain a pure-echo signal. By using the pure-echo signal to cancel a non-linear echo, a purpose of cancelling the non-linear echo is achieved.

FIG. 3 is a schematic diagram of a network architecture of an echo cancellation method according to an example of the present application. Please refer to FIG. 3, an electronic device 1 is an electronic device having dual sound pickup apparatuses, that is, the electronic device 1 has two sound pickup apparatuses, a first sound pickup apparatus and a second sound pickup apparatus, respectively, the sound pickup apparatus may be a microphone, a microphone array, etc. The electronic device 1 and an electronic device 2 are in a call, such as a voice call, a video call, and so on. During the call, the electronic device (such as the electronic device 1) at a local end is in a hands-free mode, so that both microphones of the electronic device at the local end can pick up an echo, that is, a voice of the electronic device at a peer end that is played by the speaker of the electronic device at the local end. In order that the voice sent by the electronic device 1 to the electronic device 2 to be as clear as possible, the electronic device 1 needs to cancel the echo as much as possible and retain the voice as much as possible.

It should be noted that in FIG. 3, the electronic device 1 is in the hands-free mode, a case may be that the electronic device 1 enters the hands-free mode after receiving a user's instruction, for example, during a call, a user 1 touches a speaker icon on a user interface of the electronic device 1, so that the electronic device 1 is in the hands-free mode; for another example, the electronic device 1 is in the hands-free mode during a video process with use of a tool for social chat.

In addition, it should also be noted that, although the architecture described in FIG. 3 only schematically shows the electronic device 1 and the electronic device 2, it may be understood that, in practice, the network architecture also includes a base station and other devices. Hereinafter, based on the architecture shown in FIG. 3, the echo cancellation method described in the embodiment of the present application will be described in detail.

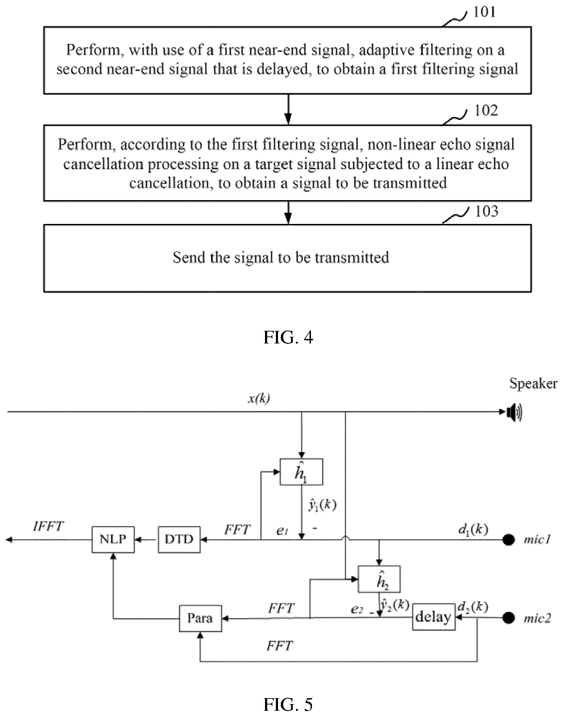

FIG. 4 is a flowchart of an echo cancellation method according to an embodiment of the present application, this embodiment is applied to an electronic device having dual sound pickup apparatuses, that is, the electronic device has two sound pickup apparatuses, a first sound pickup apparatus and a second sound pickup apparatus, respectively, this embodiment includes:

101, perform, with use of a first near-end signal $d_1(k)$, adaptive filtering on a second near-end signal $d_2(k)$ that is delayed, to obtain a first filtering signal $e_2(k)$

The first near-end signal $d_1(k)$ is a signal picked up by the first sound pickup apparatus, and the second near-end signal $d_2(k)$ is a signal picked up by the second sound pickup apparatus.

Exemplarily, there are two microphones (mic) on the electronic device at a local end. During a voice call, the two microphones pick up sounds, the sound picked up by the first sound pickup apparatus is called the first near-end signal $d_1(k)$, and the sound picked up by the second sound pickup apparatus is called the second near-end signal $d_2(k)$. After that, the second near-end signal $d_2(k)$ of the second sound pickup apparatus is appropriately time-delayed, and the adaptive filtering on the second near-end signal $d_2(k)$ that is delayed is performed with use of the first near-end signal $d_1(k)$ to filter out the voice in the second near-end signal $d_2(k)$, so as to obtain the first filtering signal $e_2(k)$ for which only a pure echo is retained.

Optionally, when the electronic device is in a hands-free call mode, the method described in this embodiment is executed.

102, perform, according to the first filtering signal $e_2(k)$, non-linear echo signal cancellation processing on a target signal subjected to a linear echo cancellation, to obtain a signal to be transmitted $EE_1(k)$.

The target signal is the first near-end signal $d_1(k)$ or the second near-end signal $d_2(k)$ subjected to the linear echo cancellation.

Exemplarily, the electronic device may perform echo cancellation processing on the first near-end signal $d_1(k)$ according to the first filtering signal $e_2(k)$ to obtain the signal to be transmitted $EE_1(k)$; or, perform, with use of the first filtering signal $e_2(k)$, echo cancellation processing on the second near-end signal $d_2(k)$ to obtain the signal to be transmitted $EE_1(k)$; or, the electronic device performs two-stage Wiener filtering on the first near-end signal $d_1(k)$ by using the first filtering signal $e_2(k)$ as an echo estimation, to obtain the signal to be transmitted $EE_1(k)$; or, the electronic device performs two-stage Wiener filtering on the second near-end signal $d_2(k)$ by using the first filtering signal $e_2(k)$ as an echo estimation, to obtain the signal to be transmitted $EE_1(k)$.

103, send the signal to be transmitted $EE_1(k)$.

Exemplarily, the electronic device sends the signal to be transmitted $EE_1(k)$ to the electronic device at the peer end, so that the electronic device at the peer end plays it.

The echo cancellation method according to the embodiments of the present application, which are applied to an electronic device having a first sound pickup apparatus and a second sound pickup apparatus, are used in a voice communication process to: perform, with use of a first near-end signal $d_1(k)$, adaptive filtering on a second near-end signal $d_2(k)$ that is delayed, to obtain a first filtering signal $e_2(k)$, where the filtering signal $e_2(k)$ is an echo signal with a voice being filtered out and with only an echo being retained; then determine, with use of the filtering signal $e_2(k)$ $e_2(k)$, a signal to be transmitted $EE_1(k)$; and send same to a peer-end electronic device. In this process, two microphones perform adaptive filtering on each other, so that a voice signal in a sound signal picked up by one of the microphones is removed to obtain a pure-echo signal. By using the pure-echo signal to cancel a non-linear echo in the sound signal picked up by any one of the microphones, a purpose of cancelling the non-linear echo is improved.

FIG. 5 is a schematic diagram illustrating principles of an echo cancellation method according to an embodiment of the present application. Please refer to FIG. 5, in this embodiment, a first near-end signal $d_1(k)$ picked up by a first sound pickup apparatus (mic1) is taken as a reference signal, and after a second near-end signal $d_2(k)$ picked up by a second sound pickup apparatus (mic2) is properly time-delayed, perform, with use of the first near-end signal $d_1(k)$, adaptive filtering on the second near-end signal $d_2(k)$ that is delayed, this is aimed to remove a voice signal in the second near-end signal $d_2(k)$ and retain an echo signal, thereby obtaining a first filtering signal $e_2(k)$. Then, construct a non-linear suppression parameter *Para* with use of the second near-end signal $d_2(k)$ before and after the adaptive filtering, and construct the non-linear suppression parameter *Para* with use of the second near-end signal $d_2(k)$ and the first filtering signal $e_2(k)$, and perform, with use of the non-linear suppression parameter, non-linear echo cancellation processing on the first near-end signal $d_1(k)$ or the second near-end signal $d_2(k)$.

In FIG. 5, the electronic device may perform a delay process on the second near-end signal $d_2(k)$ picked up by the second sound pickup apparatus, then perform, with use of the first near-end signal $d_1(k)$, the adaptive filtering on the second near-end signal $d_2(k)$ that is delayed to obtain the first filtering signal $e_2(k)$, and then perform, with use of the first filtering signal $e_2(k)$, non-linear echo cancellation processing on the first near-end signal $d_1(k)$ or the second near-end signal $d_2(k)$ to obtain the signal to be transmitted $EE_1(k)$. In addition, in the above embodiments, the electronic device may also perform the delay process on the first near-end signal $d_1(k)$ picked up by the first sound pickup apparatus, then perform, with use of the second near-end signal $d_2(k)$, the adaptive filtering on the first near-end signal $d_1(k)$ to obtain a filtering signal, and then perform, with use of the filtering signal, the non-linear echo cancellation processing on the first near-end signal $d_1(k)$ or the second near-end signal $d_2(k)$ to obtain the signal to be transmitted $EE_1(k)$.

Next, description will be made in detail below by taking an example where the electronic device may perform a delay process on the second near-end signal $d_2(k)$ picked up by the second sound pickup apparatus, then perform, with use of the first near-end signal $d_1(k)$, the adaptive filtering on the second near-end signal $d_2(k)$ that is delayed to obtain the first filtering signal $e_2(k)$, and then perform, with use of the first filtering signal $e_2(k)$, non-linear echo cancellation processing on the first near-end signal $d_1(k)$ or the second near-end signal $d_1(k)$ to obtain the signal to be transmitted $EE_1(k)$.

First, the adaptive filtering.

Please refer to FIG. 5, a first near-end signal framing composed of an echo and a near-end voice picked up by the first sound pickup apparatus is $d_1(k)$, and a second near-end signal framing composed of an echo and a near-end voice picked up by the second sound pickup apparatus is $d_2(k)$. A downlink signal played by a speaker of the electronic device is $x(k)$, and a filter used is a frequency domain adaptive filter with M-taps. When an amplitude of the downlink signal $x(k)$ is less than a preset threshold, perform the adaptive filtering on the second near-end signal $d_2(k)$; when an amplitude of the downlink signal $x(k)$ is greater than or equal to a preset threshold, stop updating an adaptive parameter, and set an upper and lower range for coefficients of the adaptive filter. In this process, the voice signal in the second near-end signal $d_2(k)$ is filtered out through the adaptive filter and the echo signal is retained as much as possible, thereby obtaining the first filtering signal $e_2(k)$.

$$e_2\left(k\right) = d_2(\mathrm{k}) - \hat{y}_2(\mathrm{k}) = d_2(\mathrm{k}) - d_1(\mathrm{k}) \times \hat{h}_2 \qquad (5)$$

where k represents a k-th frame signal, when a sampling rate is 8000 Hz, each frame signal has M=160 sampling points, the first near-end signal $d_1(k)$ represents the k-th frame signal picked up by the first sound pickup apparatus, and the second near-end signal $d_2(k)$ represents the k-th frame signal picked up by the second sound pickup apparatus, $\hat{y}_2$ represents an analog echo signal from the first sound pickup apparatus to the second sound pickup apparatus, $\hat{h}_2$ represents a path from the first sound pickup apparatus to the second sound pickup apparatus. Since the path may be considered to be linear for a near-end voice signal, the voice signal in the second near-end signal $d_2(k)$ may be cancelled cleanly through the adaptive filtering, retaining only the echo signal. The adaptive filter may be a frequency domain normalized least mean square (Frequency Domain Normalized Least Mean Square, FDNLMS) adaptive filter.

Second, construct the non-linear suppression parameter Para.

**[0055]** Exemplarily, the electronic device transform the second near-end signal $d_2(k)$ before the adaptive filtering into a frequency domain by using a fast Fourier (Fast Fourier Transform, FFT) transform. During a transforming process, the electronic device determines a first intermediate signal $E_2(k)$ according to the first filtering signal $e_2(k)$. In addition, the electronic device transforms a time domain signal after the adaptive filtering, i.e., the first filtering signal $e_2(k)$, into the frequency domain by using the FFT transform., and during the transforming process, determines a second intermediate signal $D_2(k)$ according to the second near-end signal $d_2(k)$. After that, the electronic device determines a first frequency domain signal $YY(k)$ according to the first intermediate signal $E_2(k)$. After that, the electronic device determines a second frequency domain signal $XX(k)$ according to the second intermediate signal $D_2(k)$. Finally, the electronic device constructs the non-linear suppression parameter $Para$ according to the first frequency domain signal $YY(k)$ and the second frequency domain signal $XX(k)$.

In the above embodiments, the first intermediate signal is represented as follows:

$$E_2(k) = FFT \begin{bmatrix} e_2(k-1) \\ e_2(k) \end{bmatrix} \qquad (6)$$

where $e_2(k-1)$ is a previous frame signal of $e_2(k)$;

the second intermediate signal is represented as follows:

$$D_2(k) = FFT \begin{bmatrix} d_2(k-1) \\ d_2(k) \end{bmatrix} \qquad (7)$$

where $d_2(k-1)$ is a previous frame signal of $d_2(k)$;

the first frequency domain signal $YY(k)$ is represented as follows:

$$YY(\mathrm{k}) = \text{first M+1 elements of } E_2\left(k\right) \qquad (8)$$

where the element may be understood as a frequency point, or it may be understood as a sampling point in the frequency domain after a short-time Fourier transform (short-time Fourier transform, STFT).

The second frequency domain signal XX(k) is represented as follows:

$$XX(\mathrm{k}) = \text{first M+1 elements of } D_2\left(k\right) \qquad (9)$$

the non-linear suppression parameter *Para* is represented as follows:

$$Para = [\mathrm{abs}(XX(\mathrm{k})) - \mathrm{abs}(YY(\mathrm{k}))] / \mathrm{abs}(XX(\mathrm{k})) \qquad (10);$$

where FFT represents a fast Fourier transform, and abs represents a modulus of a complex number.

According to the above, it can be seen that: a difference between the first frequency domain signal *YY(k)* and the second frequency domain signal *XX(k)* is that a former with the voice signal being filtered out and only the echo signal being retained. This is because a voice frequency point in a sound picked up by the first sound pickup apparatus are highly correlated with a voice frequency point in a sound picked up by the second sound pickup apparatus, therefore, after adaptive filtering, it is possible to remove the voice signal well while retaining the echo signal, and the echo signal contains the non-linear echo.

In the above embodiments, for an echo frequency point in the second frequency domain signal *XX*(k), a difference between the non-linear suppression parameter *Para* and 0 is less than a first threshold, for a voice frequency point in the second frequency domain signal *XX*(k), a difference between the non-linear suppression parameter *Para* and 1 is less than a second threshold.

Exemplarily, according to the formula (10), it can be seen that: for the echo frequency point, a value in a vector of the first frequency domain signal *YY(k)* is almost equal to a corresponding value in a vector of the second frequency domain signal *XX*(k), so that the difference between the non-linear suppression parameter *Para* of the echo frequency point and 0 is smaller than the first threshold, that is, the non-linear suppression parameter *Para* of the echo frequency point is close to 0; for the voice frequency point, since a voice component in the first frequency domain signal *YY(k)* has been filtered out, the difference between the non-linear suppression parameter *Para* of the voice frequency point and 1 is smaller than the second threshold, that is, the non-linear suppression parameter *Para* of the voice frequency point is close to 1.

Finally, the adaptive filtering and the non-linear programming.

According to the above process of determining the non-linear suppression parameter Para, it can be seen that: the value of the non-linear suppression parameter *Para* at the echo frequency point is close to 0 and the value at the voice frequency point is close to 1, at this time, if the non-linear suppression parameter *Para* is directly multiplied by the microphone signal in the frequency domain, the echo frequency point will be effectively suppressed and the voice frequency point will not be damaged as much as possible. In order to make an echo cancellation effect better, it is necessary to perform the adaptive filtering before the signal to be transmitted $EE_1$(k) is determined according to the non-linear suppression parameter *Para* and the third frequency domain signal *ZZ*(k), that is, before the non-linear filtering.

Taking the echo cancellation of the first near-end signal $d_1(k)$ as an example, the electronic device needs to perform adaptive filtering on the first near-end signal $d_1(k)$ first, where the adaptive filtering takes the downlink signal $x(k)$ as a reference signal, and perform, with use of the downlink signal $x(k)$, the adaptive filtering on the first near-end signal $d_1(k)$ to obtain a second filtering signal $e_1(k)$. The second filtering signal $e_1(k)$ is represented as follows:

$$e_1\left(k\right) = d_1(\mathrm{k}) - \hat{y}_1(\mathrm{k}) = x(\mathrm{k}) \times (h_1^{T} - \hat{h_1}^{T}) + v_1(\mathrm{k}) \qquad (11)$$

where the first near-end signal $d_1(k)$ includes the voice signal $v_1$(k) and the echo signal $y_1$(k), $\hat{y}_1$(k) is an analog echo signal obtained by simulating $y_1$(k), $x$(k) is a downlink signal played by the speaker, $h_1^T$ is an echo path from the speaker to the first sound pickup apparatus, $\hat{h_1}^{T}$ is an echo estimation of the echo path from the speaker to the first sound pickup apparatus, $v_1$(k) is a voice signal picked up by the first sound pickup apparatus.

According to the formula (11), the linear echo in the first near-end signal $d_1(k)$ can be cancelled, and thus the second filtering signal $e_1(k)$ can be obtained, the second filtering signal $e_1(k)$ still contains many non-linear echoes. In order to cancel the non-linear echoes, the electronic device determines a third intermediate signal $E_1(k)$ according to the second filtering signal $e_1(k)$, and the third intermediate signal is represented as follows:

$$E_1(k) = FFT\begin{bmatrix} e_1(k-1) \\ e_1(k) \end{bmatrix}, \qquad (12)$$

where $e_1(k-1)$ is a previous frame signal of $e_1(k)$.

After transforming the second filtering signal $e_1(k)$ into the frequency domain, the electronic device determines a third frequency domain signal ZZ(k) according to the third intermediate signal $E_1(k)$, and the third frequency domain signal is represented as follows:

ZZ(k) is equal to first M+1 elements of $E_1(k)$.

Then, the electronic device determines the signal to be transmitted $EE_1(k)$ according to the non-linear suppression parameter *Para* and the third frequency domain signal ZZ(k), and the signal to be transmitted $EE_1(k)$ is represented as follows:

$$EE_1(\mathrm{k}) = ZZ(\mathrm{k})g\,\mathrm{para} \qquad (13)$$

In addition, when the electronic device determines the signal to be transmitted $EE_1(k)$ according to the non-linear suppression parameter *Para* and the third frequency domain signal ZZ(k), a voice type may also be considered, and the non-linear suppression parameter *Para* is calculated according to the voice type. In this process, the electronic device determines the voice type of the first near-end signal $d_1(k)$, where the voice type includes a pure-echo type and a double talk voice type; and determines a parameter *n* according to the voice type, where the parameter *n* corresponding to the pure-echo type is greater than the parameter n corresponding to the double talk voice type, and the parameter n is used to indicate a suppression intensity of a non-linear echo. Finally, the signal to be transmitted $EE_1(k)$ is represented as follows:

$$EE_1(\mathrm{k}) = ZZ(\mathrm{k})g\,\mathrm{para}^{\wedge} n \qquad (14)$$

In the formula (14), *n* is determined by a double talk detector. If the first near-end signal $d_1(k)$ is the pure echo, then the value of *n* is relatively large, and the suppression is enhanced. If a determination result indicates that the first near-end signal $d_1(k)$ is the double talk voice, that is, echo home voice, then the value of *n* is 1 or other smaller values. If a determination result indicates that there is no downlink signal $x(k)$, then no suppression is performed, that is, no non-linear echo cancellation is performed.

In the above embodiments, the element may be understood as a frequency point, or may be understood as a sampling point in the frequency domain after a short-time Fourier transform (short-time Fourier transform, STFT).

In the following, the method described in the embodiment of the present application is verified by using an example where the sound pickup apparatus specifically is a microphone, a test signal comes from a 3GPP standards database, including a pure-voice segment, a pure-echo segment, and a double talk segment, and a test is performed in an anechoic room by simulating a call scenario through simulation of the base station and artificial mouths.

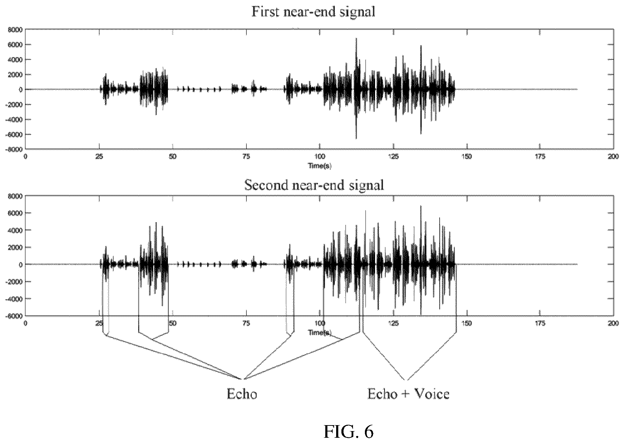

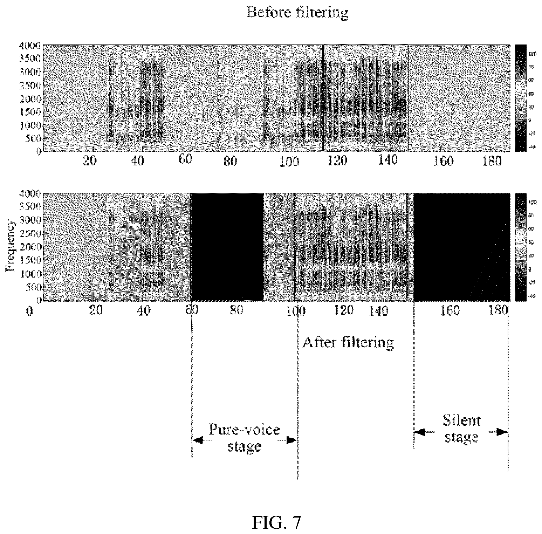

FIG. 6 is a schematic diagram of a first near-end signal and a second near-end signal in an echo cancellation method according to an embodiment of the present application. Please refer to FIG. 6, the abscissa represents time, and the ordinate represents energy. The first near-end signal includes a voice signal and an echo signal, and the second near-end signal also includes a voice signal and an echo signal. The echo signal is such a signal that a downlink signal of a peer end which reaches a speaker at a local end is played by the speaker through a digital-to-analog conversion, and then picked up by mic1 and mic2. According to FIG. 6, it can be seen that: the amplitude of the voice signal is relatively small, while the amplitude of the echo signal is relatively large, that is, the energy of the echo signal is obviously greater than the energy of the voice signal, a signal ratio, that is, a ratio of the energy of the voice signal to the energy of the echo signal is logarithmically small and a non-linear echo is relatively large, which brings great difficulties to an echo cancellation, and thus non-linear echo processing with better results is required. In the embodiment of the present application, the voice signal in mic2 is filtered out through adaptive filtering of two microphones, and only the echo signal is left, exemplarily, reference may be made to FIG. 7.

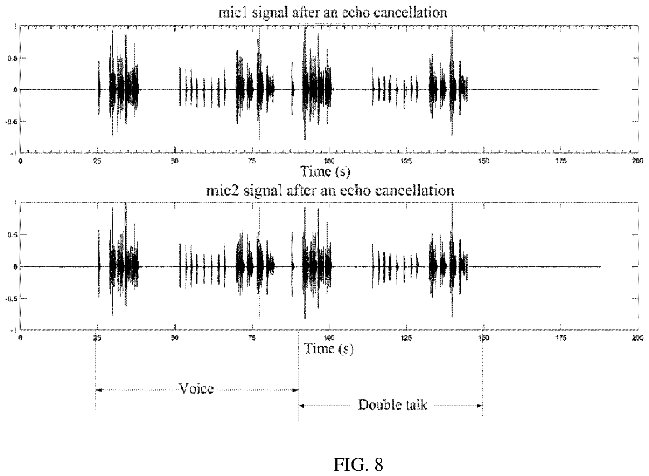

FIG. 7 is a spectrogram of a near-end signal of mic2 in FIG. 6 before and after filtering. Please refer to FIG. 7, in the pure-voice stage, a voice has been completely filtered out. In the double talk stage, only an echo is left. In the embodiment of the present application, a non-linear suppression parameter *Para* is constructed according to two signals before and after adaptive filtering in FIG. 7, and then through a double talk determining and a non-linear suppression, a final result of an echo cancellation is obtained, that is, a signal to be transmitted $EE_1$(k), exemplarily, reference may be made to FIG. 8.

FIG. 8 is a schematic diagram of a transmission result after mic1 and mic2 in FIG. 6 are subject to an echo cancellation. Please refer to FIG. 8, first 8 peaks may be regarded as a voice stage, and last 8 peaks may be regarded as a double talk stage. After an echo cancellation method provided in the present application, the echo in the double talk stage is suppressed, so that a waveform in the double talk stage and a signal waveform in the voice stage are very similar, showing that: when energy of an echo signal is significantly greater than energy of a voice signal, an echo of a pure-echo node can be cancelled cleanly, and a voice in the double talk situation can be retained better. This is because an NLP suppression parameter, that is, a non-linear suppression parameter para, of the present application, can distinguish an echo frequency point and a voice frequency point. It can be seen that the non-linear suppression parameter *Para* constructed in the present application is effective. In addition, positions where a first microphone and a second microphone are placed are not limited in the embodiment of the present application, and the method provided in the embodiment of the present application has certain robustness.

It should be noted that, although in the above embodiments, construction of one non-linear suppression parameter *Para* is used to describe the echo cancellation method provided in the embodiment of the present application in detail, in other feasible implementations, two non-linear suppression parameters may also be constructed, for example, the electronic device constructs one non-linear suppression parameter by using the first near-end signal before and after filtering, and constructs another non-linear suppression parameter by using the second near-end signal before and after filtering, and then performs the non-linear echo cancellation on the first near-end signal or the second near-end signal by using the two non-linear suppression parameters.

Moreover, in addition to the adaptive filtering, the embodiment of the present application may also use Wiener filtering to cancel the non-linear echo. In this manner, when the target signal is the first near-end signal $d_1(k)$, when determining the signal to be transmitted $EE_1(k)$ according to the first filtering signal $e_2(k)$, the electronic device performs, with use of the first filtering signal $e_2(k)$, first Wiener filtering on the first near-end signal $d_2(k)$ to obtain a first Wiener result; determines a voice type of the first near-end signal $d_2(k)$ according to the first Wiener result, where the voice type includes a pure-echo type and a double talk voice type; determines a Wiener filtering intensity according to the voice type, where the Wiener filtering intensity corresponding to the pure-echo type is greater than the Wiener filtering intensity corresponding to the double talk voice type; performs second Wiener filtering on the first near-end signal $d_2(k)$ is performed according to the Wiener filtering intensity to obtain a second Wiener result, and obtains the signal to be transmitted $EE_1(k)$ according to the second Wiener result.

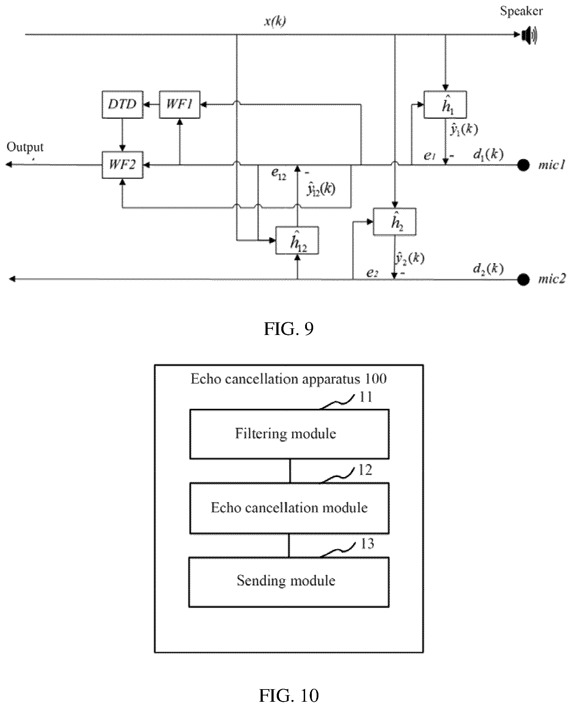

Exemplarily, reference may be made to FIG. 9, FIG. 9 is another schematic diagram illustrating principles of an echo cancellation method according to an embodiment of the present application. Please refer to FIG. 9, WF1 is first-time Wiener filtering, and WF2 is second-time Wiener filtering. After an electronic device obtains a pure-echo signal, i.e., a first filtering signal, the first filtering signal is taken as an echo estimation to perform two-stage Wiener filtering on a microphone signal before adaptive. The figure shows that the first filtering signal is taken as the echo estimation to perform the two-stage Wiener filtering on a signal of the second sound pickup apparatus before the adaptive. In a two-stage Wiener filtering process, first-time Wiener filtering may be slightly stronger, and a double talk determination is performed through a first Wiener filtering result, and then second-time Wiener filtering is performed. The second-time Wiener filtering is also performed on a microphone signal before adaptive filtering, such as a signal of the second sound pickup apparatus, and the pure-echo signal is used as the echo estimation. Different from the first-time Wiener filtering, the second-time Wiener filtering is based on the double talk determination, in a pure-echo stage, a Wiener filtering intensity is relatively large and an echo suppression is enhanced; in a double talk stage, filter coefficients may be controlled such that more voice signals can be retained. Since the echo estimation of this method is obtained through the adaptive filtering and is relatively accurate, the non-linear echo may also be effectively removed by using this scheme.

The following are apparatus embodiments of the present invention, which may be used to execute the method embodiments of the present invention. For details not disclosed in the apparatus embodiments of the present invention, please refer to the method embodiments of the present invention.

FIG. 10 is a schematic structural diagram of an echo cancellation apparatus according to an embodiment of the present invention. The echo cancellation apparatus 100 may be implemented in a software manner and/or a hardware manner. As shown in FIG. 10, the echo cancellation apparatus 100 includes:

a filtering module 11, configured to perform, with use of a first near-end signal $d_1(k)$, adaptive filtering on a second near-end signal $d_2(k)$ that is delayed, to obtain a first filtering signal $e_2(k)$, where the first near-end signal $d_1(k)$ is a signal picked up by the first sound pickup apparatus, and the second near-end signal $d_2(k)$ is a signal picked up by the second sound pickup apparatus;

an echo cancellation module 12, configured to perform non-linear echo signal cancellation processing on a target signal according to the first filtering signal $e_2(k)$ to obtain a signal to be transmitted $EE_1$(k), where the target signal is the first near-end signal $d_1(k)$ or the second near-end signal $d_2(k)$; and

a sending module 13, configured to send the signal to be transmitted $EE_1(k)$.

In a feasible design, when the target signal is the first near-end signal $d_1(k)$, the echo cancellation module 12 is specifically configured to: construct a non-linear suppression parameter *Para* according to the first filtering signal $e_2(k)$ and the first near-end signal $d_1(k)$; and perform the non-linear echo signal cancellation processing on the first near-end signal $d_1(k)$ according to the non-linear suppression parameter *Para* to obtain the signal to be transmitted $EE_1(k)$.

In a feasible design, the echo cancellation module 12 is specifically configured to determine a first intermediate signal $E_2(k)$ according to the first filtering signal $e_2(k)$, the first intermediate signal

$$E_2(k) = FFT \begin{bmatrix} e_2(k-1) \\ e_2(k) \end{bmatrix}$$

, where $e_2(k$-1) is a previous frame signal of $e_2(k)$; determine a second intermediate signal $D_2(k)$ according to the second near-end signal $d_2(k)$, the second intermediate signal

$$D_2(k) = FFT \begin{bmatrix} d_2(k-1) \\ d_2(k) \end{bmatrix}$$

, where $d_2(k$-1) is a previous frame signal of $d_2(k)$; determine a first frequency domain signal $YY(k)$ according to the first intermediate signal $E_2(k)$, where the first frequency domain signal $YY(k)$ is equal to first M+1 elements of $E_2(k)$; determine a second frequency domain signal $XX(k)$ according to the second intermediate signal $D_2(k)$, where the second frequency domain signal $XX(k)$ is equal to first M+1 elements of $D_2(k)$; and construct the non-linear suppression parameter *Para* according to the first frequency domain signal $YY(k)$ and the second frequency domain signal XX(k), *Para* = [abs(XX(k))- abs(YY(k))]/ abs(XX(k)); where FFT represents a fast Fourier transform, abs represents a modulus of a complex number.

In a feasible design, the echo cancellation module 12 is configured to: perform, with use of a downlink signal $x(k)$, the adaptive filtering on the first near-end signal $d_1(k)$ to obtain a second filtering signal $e_1(k)$,

$$e_1(k) = x(k) \times (h_1^T - \hat{h}_1^T) + v_1(k)$$

, where $x(k)$ is a downlink signal played by a speaker, $h_1^T$ is an echo path from the speaker to the first sound pickup apparatus, $\hat{h}_1^T$ is an echo estimation of the echo path from the speaker to the first sound pickup apparatus, $v_1(k)$ is a voice signal picked up by the first sound pickup apparatus; determine a third intermediate signal $E_1(k)$ according to the second filtering signal $e_1(k)$, the third intermediate signal

$$E_1(k) = FFT \begin{bmatrix} e_1(k-1) \\ e_1(k) \end{bmatrix}$$

, where $e_1(k$-1) is a previous frame signal of $e_1(k)$; determine a third frequency domain signal ZZ(k) according to the third intermediate signal $E_1(k)$, where the third frequency domain signal ZZ(k) is equal to first M+1 elements of $E_1(k)$; and determine the signal to be transmitted $EE_1(k)$ according to the non-linear suppression parameter *Para* and the third frequency domain signal ZZ(k).

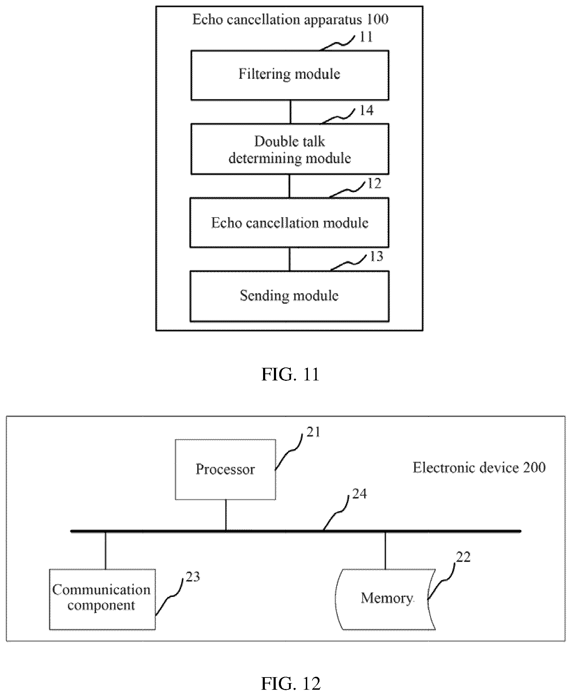

FIG. 11 is a schematic diagram of another echo cancellation apparatus according to an embodiment of the present application. Please refer to FIG. 11, on a basis of the above FIG. 10, the echo cancellation apparatus 100 provided by the embodiment further includes:

a double talk determining module 14, configured to determine a voice type of the first near-end signal $d_1(k)$, where the voice type includes a pure-echo type and a double talk voice type; and determine a parameter $n$ according to the voice type, where the parameter $n$ corresponding to the pure-echo type is greater than the parameter $n$ corresponding to the double talk voice type, and the parameter $n$ is used to indicate a suppression intensity of a non-linear echo.

In a feasible design, the echo cancellation module 12 is configured to determine an n-th power of the non-linear suppression parameter Para; and determine the signal to be transmitted $EE_1(k)$ according to the n-th power of the non-linear suppression parameter *Para* and the third frequency domain signal ZZ(k), $EE_1(k)$ = ZZ(k)g para^ $n$, where g represents dot multiplication.

In a feasible design, for an echo frequency point in the second frequency domain signal XX(k), a difference between the non-linear suppression parameter *Para* and 0 is less than a first threshold, for a voice frequency point in the second frequency domain signal $XX(k)$, a difference between the non-linear suppression parameter *Para* and 1 is less than a second threshold.

In a feasible design, the echo cancellation module 12 is configured to: perform, with use of the first filtering signal $e_2(k)$, first Wiener filtering on the first near-end signal $d_2(k)$ to obtain a first Wiener result; determine a voice type of the first near-end signal $d_2(k)$ according to the first Wiener result, where the voice type includes a pure-echo type and a double talk voice type; determine a Wiener filtering intensity according to the voice type, where the Wiener filtering intensity corresponding to the pure-echo type is greater than the Wiener filtering intensity corresponding to the double talk voice type; perform second Wiener filtering on the first near-end signal $d_2(k)$ according to the Wiener filtering intensity to obtain a second Wiener result, and obtain the signal to be transmitted $EE_1$(k) according to the second Wiener result.

FIG. 12 is a schematic structural diagram of an electronic device according to an embodiment of the present invention. As shown in FIG. 12, the electronic device 200 includes:

> at least one processor 21 and a memory 22;
> the memory 22 stores computer executable instructions;
> the at least one processor 21 executes the computer executable instructions stored in the memory 22, so that the at least one processor 21 executes the echo cancellation method as described above.

Optionally, the electronic device 200 further includes a communication component 23. The processor 21, the memory 22, and the communication component 23 may be connected via a bus 24.

An embodiment of the present invention also provides a readable storage medium having computer executable instructions stored thereon, where when the computer executable instructions are executed by a processor, the echo cancellation method as described above is implemented.

An embodiment of the present invention also provides a computer program product, where when the computer program product runs on an electronic device, the electronic device is enabled to execute the echo cancellation method as described above.

A person of ordinary skill in the art may understand that: all or part of the steps in the above method embodiments may be completed by hardware related to a program instruction. The aforementioned computer program may be stored in a computer readable storage medium. When the program is executed, the steps included in the above method embodiments are implemented; and the foregoing readable storage medium includes: a ROM, a RAM, a magnetic disk, or an optical disk or other media on which program codes can be stored.

Finally, it should be noted that: the above embodiments are only used to illustrate the technical solutions of the present invention, but not to limit it; although the present invention has been illustrated in detail with reference to the foregoing embodiments, those of ordinary skill in the art should understand that: the technical solutions recorded in the foregoing embodiments may still be modified, or some or all of the technical features may be equivalently substituted; and these modifications or substitutions do not make the essence of the corresponding technical solutions deviate from the scope of the technical solutions of the embodiments of the present invention.

**Claims**

1. An echo cancellation method, which is applied to an electronic device having a first sound pickup apparatus and a second sound pickup apparatus, the method comprises:

   performing, with use of a first near-end signal $d_1(k)$, adaptive filtering on a second near-end signal $d_2(k)$ that is delayed, to obtain a first filtering signal $e_2(k)$, wherein the first near-end signal $d_1(k)$ is a signal picked up by the first sound pickup apparatus, and the second near-end signal $d_2(k)$ is a signal picked up by the second sound pickup apparatus;
   performing, according to the first filtering signal $e_2(k)$, non-linear echo signal cancellation processing on a target signal subjected to a linear echo cancellation, to obtain a signal to be transmitted $EE_1$(k), wherein the target signal is the first near-end signal $d_1(k)$ or the second near-end signal $d_2(k)$; and
   sending the signal to be transmitted $EE_1$(k).

2. The method according to claim 1, wherein when the target signal is the first near-end signal $d_1(k)$, the performing the non-linear echo signal cancellation processing on the target signal according to the first filtering signal $e_2(k)$ to obtain the signal to be transmitted $EE_1(k)$ comprises:

   constructing a non-linear suppression parameter *Para* according to the first filtering signal $e_2$(k) and the first near-end signal $d_1(k)$; and
   performing the non-linear echo signal cancellation processing on the first near-end signal $d_1(k)$ according to the non-linear suppression parameter *Para* to obtain the signal to be transmitted $EE_1$(k).

3. The method according to claim 2, wherein before the performing the non-linear echo signal cancellation processing on the first near-end signal $d_1(k)$ according to the non-linear suppression parameter *Para* to obtain the signal to be transmitted $EE_1$(k), further comprising:

determining a first intermediate signal $E_2(k)$ according to the first filtering signal $e_2(k)$, the first intermediate signal $E_2(k) = FFT\begin{bmatrix} e_2(k-1) \\ e_2(k) \end{bmatrix}$, wherein $e_2(k-1)$ is a previous frame signal of $e_2(k)$;

determining a second intermediate signal $D_2(k)$ according to the second near-end signal $d_2(k)$, the second intermediate signal $D_2(k) = FFT\begin{bmatrix} d_2(k-1) \\ d_2(k) \end{bmatrix}$, wherein $d_2(k-1)$ is a previous frame signal of $d_2(k)$;

determining a first frequency domain signal $YY(k)$ according to the first intermediate signal $E_2(k)$, wherein $YY(k)$ is equal to first M+1 elements of $E_2(k)$;

determining a second frequency domain signal $XX(k)$ according to the second intermediate signal $D_2(k)$, wherein $XX(k)$ is equal to first M+1 elements of $D_2(k)$ ; and

constructing the non-linear suppression parameter $Para$ according to the first frequency domain signal $YY(k)$ and the second frequency domain signal $XX(k)$, $Para = [abs(XX(k))- abs(YY(k))]/ abs(XX(k))$; wherein FFT represents a fast Fourier transform, abs represents a modulus of a complex number.

4. The method according to claim 3, wherein the performing the non-linear echo signal cancellation processing on the first near-end signal $d_1(k)$ according to the non-linear suppression parameter $Para$ to obtain the signal to be transmitted $EE_1(k)$ comprises:

performing, with use of a downlink signal $x(k)$, the adaptive filtering on the first near-end signal $d_1(k)$ to obtain a second filtering signal $e_1(k)$ , $e_1(k) = x(k) \times (h_1^T - \hat{h}_1^T) + v_1(k)$ , wherein $x(k)$ is a downlink signal played by a speaker of the electronic device, $h_1^T$ is an echo path from the speaker to the first sound pickup apparatus, $\hat{h}_1^T$ is an echo estimation of the echo path from the speaker to the first sound pickup apparatus, $v_1(k)$ is a voice signal picked up by the first sound pickup apparatus;

determining a third intermediate signal $E_1(k)$ according to the second filtering signal $e_1(k)$, the third intermediate signal $E_1(k) = FFT\begin{bmatrix} e_1(k-1) \\ e_1(k) \end{bmatrix}$, wherein $e_1(k-1)$ is a previous frame signal of $e_1(k)$;

determining a third frequency domain signal $ZZ(k)$ according to the third intermediate signal $E_1(k)$, wherein the third frequency domain signal $ZZ(k)$ is equal to first M+1 elements of $E_1(k)$; and

determining the signal to be transmitted $EE_1(k)$ according to the non-linear suppression parameter $Para$ and the third frequency domain signal $ZZ(k)$.

5. The method according to claim 4, further comprising:

determining a voice type of the first near-end signal $d_1(k)$, wherein the voice type comprises a pure-echo type and a double talk voice type; and

determining a parameter $n$ according to the voice type, wherein the parameter $n$ corresponding to the pure-echo type is greater than the parameter n corresponding to the double talk voice type, and the parameter n is used to indicate a suppression intensity of a non-linear echo.

6. The method according to claim 5, wherein the determining the signal to be transmitted $EE_1(k)$ according to the non-linear suppression parameter $Para$ and the third frequency domain signal $ZZ(k)$ comprises:

determining an n-th power of the non-linear suppression parameter Para; and

determining the signal to be transmitted $EE_1(k)$ according to the n-th power of the non-linear suppression parameter $Para$ and the third frequency domain signal $ZZ(k)$, $EE_1(k) = ZZ(k)g\ para^n$, wherein g represents dot multiplication.

7. The method according to any one of claims 3 to 6, wherein for an echo frequency point in the second frequency domain signal $XX(k)$, a difference between the non-linear suppression parameter $Para$ and 0 is less than a first threshold, for a voice frequency point in the second frequency domain signal $XX(k)$, a difference between the non-linear suppression parameter *Para* and 1 is less than a second threshold.

8. The method according to claim 1, wherein when the target signal is the first near-end signal $d_1(k)$, the determining the signal to be transmitted $EE_1$(k) according to the first filtering signal $e_2(k)$ comprises:

performing, with use of the first filtering signal $e_2(k)$, first Wiener filtering on the first near-end signal $d_2(k)$ to obtain a first Wiener result;

determining a voice type of the first near-end signal $d_2(k)$ according to the first Wiener result, wherein the voice type comprises a pure-echo type and a double talk voice type;

determining a Wiener filtering intensity according to the voice type, wherein the Wiener filtering intensity corresponding to the pure-echo type is greater than the Wiener filtering intensity corresponding to the double talk voice type; and

performing second Wiener filtering on the first near-end signal $d_2(k)$ according to the Wiener filtering intensity to obtain a second Wiener result, and obtaining the signal to be transmitted $EE_1$(k) according to the second Wiener result.

9. An echo cancellation apparatus, which is applied to an electronic device having a first sound pickup apparatus and a second sound pickup apparatus, the echo cancellation apparatus comprises:

a filtering module, configured to perform, with use of a first near-end signal $d_1(k)$, adaptive filtering on a second near-end signal $d_2(k)$ that is delayed, to obtain a first filtering signal $e_2(k)$, wherein the first near-end signal $d_1(k)$ is a signal picked up by the first sound pickup apparatus, and the second near-end signal $d_2(k)$ is a signal picked up by the second sound pickup apparatus;

an echo cancellation module, configured to perform non-linear echo signal cancellation processing on a target signal according to the first filtering signal $e_2(k)$ to obtain a signal to be transmitted $EE_1$(k), wherein the target signal is the first near-end signal $d_1(k)$ or the second near-end signal $d_2(k)$; and

a sending module, configured to send the signal to be transmitted $EE_1$(k).

10. The apparatus according to claim 9, wherein when the target signal is the first near-end signal $d_1(k)$, the echo cancellation module is specifically configured to: construct a non-linear suppression parameter *Para* according to the first filtering signal $e_2(k)$ and the first near-end signal $d_1(k)$; and perform the non-linear echo signal cancellation processing on the first near-end signal $d_1(k)$ according to the non-linear suppression parameter *Para* to obtain the signal to be transmitted $EE_1$(k).

11. The apparatus according to claim 10, wherein the echo cancellation module is specifically configured to: determine a first intermediate signal $E_2(k)$ according to the first filtering signal $e_2(k)$, the first intermediate signal $E_2(k) =$

$$FFT \begin{bmatrix} e_2(k-1) \\ e_2(k) \end{bmatrix}$$, wherein $e_2(k-1)$ is a previous frame signal of $e_2(k)$; determine a second intermediate signal $D_2$(k) according to the second near-end signal $d_2(k)$, the second intermediate signal

$$D_2(k) = FFT \begin{bmatrix} d_2(k-1) \\ d_2(k) \end{bmatrix}$$, wherein $d_2(k-1)$ is a previous frame signal of $d_2(k)$; determine a first frequency domain signal $YY(k)$ according to the first intermediate signal $E_2(k)$, wherein the first frequency domain signal $YY(k)$ is equal to first M+1 elements of $E_2(k)$; determine a second frequency domain signal XX(k) according to the second intermediate signal $D_2(k)$, wherein the second frequency domain signal XX(k) is equal to first M+1 elements of $D_2(k)$; and construct the non-linear suppression parameter *Para* according to the first frequency domain signal $YY(k)$ and the second frequency domain signal XX(k), *Para*=[abs(XX(k))-abs(YY(k))]/abs(XX(k)); wherein FFT represents a fast Fourier transform, abs represents a modulus of a complex number.

12. The apparatus according to claim 11,

wherein the echo cancellation module is configured to: perform, with use of a downlink signal $x(k)$, the adaptive filtering on the first near-end signal $d_1(k)$ to obtain a second filtering signal $e_1(k)$, $$e_1(k) = x(k) \times (h_1^T - \hat{h}_1^T) + v_1(k)$$, wherein $x(k)$ is a downlink signal played by a speaker of the electronic device, $h_1^T$ is an echo path from the speaker to the first sound pickup apparatus, $\hat{h}_1^T$ is an estimation of the echo path from the speaker to the first sound pickup apparatus, $v_1(k)$ is a voice signal picked up by the first sound pickup apparatus; determine a third intermediate signal $E_1(k)$ according to the second filtering signal $e_1(k)$, the third intermediate signal $E_1(k) = FFT\begin{bmatrix} e_1(k-1) \\ e_1(k) \end{bmatrix}$, wherein $e_1(k-1)$ is a previous frame signal of $e_1(k)$; determine a third frequency domain signal ZZ(k) according to the third intermediate signal $E_1(k)$, wherein the third frequency domain signal ZZ(k) is equal to first M+1 elements of $E_1(k)$; and determine the signal to be transmitted $EE_1(k)$ according to the non-linear suppression parameter *Para* and the third frequency domain signal ZZ(k).

**13.** The apparatus according to claim 12, further comprising:
a double talk determining module, configured to determine a voice type of the first near-end signal $d_1(k)$, wherein the voice type comprises a pure-echo type and a double talk voice type; and determine a parameter *n* according to the voice type, wherein the parameter *n* corresponding to the pure-echo type is greater than the parameter *n* corresponding to the double talk voice type, and the parameter *n* is used to indicate a suppression intensity of a non-linear echo.

**14.** The apparatus according to claim 13,
wherein the echo cancellation module is configured to: determine an n-th power of the non-linear suppression parameter Para; and determine the signal to be transmitted $EE_1(k)$ according to the n-th power of the non-linear suppression parameter *Para* and the third frequency domain signal ZZ(k), $EE_1(k) = ZZ(k)g\ para\wedge n$, wherein g represents dot multiplication.

**15.** The apparatus according to any one of claims 11 to 14, wherein for an echo frequency point in the second frequency domain signal XX(k), a difference between the non-linear suppression parameter *Para* and 0 is less than a first threshold, for a voice frequency point in the second frequency domain signal *XX*(k), a difference between the non-linear suppression parameter *Para* and 1 is less than a second threshold.

**16.** The apparatus according to claim 9,
wherein the echo cancellation module is configured to: perform, with use of the first filtering signal $e_2(k)$, first Wiener filtering on the first near-end signal $d_2(k)$ to obtain a first Wiener result; determine a voice type of the first near-end signal $d_2(k)$ according to the first Wiener result, wherein the voice type comprises a pure-echo type and a double talk voice type; determine a Wiener filtering intensity according to the voice type, wherein the Wiener filtering intensity corresponding to the pure-echo type is greater than the Wiener filtering intensity corresponding to the double talk voice type; perform second Wiener filtering on the first near-end signal $d_2(k)$ according to the Wiener filtering intensity to obtain a second Wiener result, and obtain the signal to be transmitted $EE_1(k)$ according to the second Wiener result.

**17.** An electronic device, comprising: a processor, a memory and a computer program; wherein the computer program is stored in the memory and is configured to be executed by the processor, the computer program comprises instructions for executing the method according to any one of claims 1 to 8.

**18.** A readable storage medium having instructions stored thereon, wherein when the instructions run on an electronic device, the electronic device is enabled to execute the method according to any one of claims 1 to 8.

**19.** A computer program product, wherein when the computer program product runs on an electronic device, the electronic device is enabled to execute the method according to any one of claims 1 to 8.

FIG. 1

FIG. 2

FIG. 3

101

Perform, with use of a first near-end signal, adaptive filtering on a second near-end signal that is delayed, to obtain a first filtering signal

102

Perform, according to the first filtering signal, non-linear echo signal cancellation processing on a target signal subjected to a linear echo cancellation, to obtain a signal to be transmitted

103

Send the signal to be transmitted

FIG. 4

FIG. 5

First near-end signal

Second near-end signal

Echo

Echo + Voice

FIG. 6

Before filtering

After filtering

Pure-voice
stage

Silent
stage

FIG. 7

mic1 signal after an echo cancellation

Time (s)

mic2 signal after an echo cancellation

Time (s)

Voice

Double talk

FIG. 8

FIG. 9

FIG. 10

Echo cancellation apparatus 100

11

Filtering module

14

Double talk
determining module

12

Echo cancellation module

13

Sending module

FIG. 11

21

Processor

Electronic device 200

24

22

Communication
component

23

Memory

FIG. 12

## INTERNATIONAL SEARCH REPORT

| International application No. |
|---|
| **PCT/CN2020/134336** |

**A. CLASSIFICATION OF SUBJECT MATTER**

G10L 21/0216(2013.01)i; G10L 21/0232(2013.01)i; G10L 21/0208(2013.01)i

According to International Patent Classification (IPC) or to both national classification and IPC

**B. FIELDS SEARCHED**

Minimum documentation searched (classification system followed by classification symbols)

G10L21/-

Documentation searched other than minimum documentation to the extent that such documents are included in the fields searched

Electronic data base consulted during the international search (name of data base and, where practicable, search terms used)

CNKI, CNPAT, EPODOC, WPI: 回声, 消除, 减少, 降低, 近端, 对端, 远端, 滤波, 非线性, 抑制, 参数, 中间信号, 下行, 双讲, 频带, 频段, 频点, echo, cancel+, reduction, near end, opposite end, far end, filter, non-linearity, suppression, parameter, mid signal, dual-talk, frequency band, frequency point

**C. DOCUMENTS CONSIDERED TO BE RELEVANT**

| Category* | Citation of document, with indication, where appropriate, of the relevant passages | Relevant to claim No. |
|---|---|---|
| PX | CN 110956975 A (SPREADTRUM COMMUNICATIONS SHANGHAI INC.) 03 April 2020 (2020-04-03) claims 1-18, description, paragraphs [0149]-[0156] | 1-19 |
| X | CN 107426391 A (SPREADTRUM COMMUNICATIONS SHANGHAI INC.) 01 December 2017 (2017-12-01) description, paragraphs [0037]-[0103] | 1, 8, 9, 16-19 |
| A | WO 2011010960 A1 (LIMES AUDIO A.B. et al.) 27 January 2011 (2011-01-27) entire document | 1-19 |
| A | CN 107426392 A (SPREADTRUM COMMUNICATIONS SHANGHAI INC.) 01 December 2017 (2017-12-01) entire document | 1-19 |
| A | US 2014016794 A1 (CONEXANT SYSTEMS INC.) 16 January 2014 (2014-01-16) entire document | 1-19 |
| A | CN 104954595 B (BAIDU ONLINE NETWORK TECHNOLOGY (BEIJING) CO., LTD.) 25 July 2017 (2017-07-25) entire document | 1-19 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **03 February 2021** | **01 March 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/134336**

| Patent document cited in search report | | | Publication date (day/month/year) | Patent family member(s) | | | Publication date (day/month/year) |
|---|---|---|---|---|---|---|---|
| CN | 110956975 | A | 03 April 2020 | None | | | |
| CN | 107426391 | A | 01 December 2017 | CN | 107426391 | B | 01 November 2019 |
| WO | 2011010960 | A1 | 27 January 2011 | US | 8693678 | B2 | 08 April 2014 |
| | | | | US | 2012183133 | A1 | 19 July 2012 |
| | | | | SE | 533956 | C2 | 15 March 2011 |
| | | | | SE | 0901012 | A1 | 21 January 2011 |
| CN | 107426392 | A | 01 December 2017 | CN | 107426392 | B | 01 November 2019 |
| US | 2014016794 | A1 | 16 January 2014 | None | | | |
| CN | 104954595 | B | 25 July 2017 | CN | 104954595 | A | 30 September 2015 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201911241302